# EUROPEAN PATENT APPLICATION

(11) **EP 1 435 731 A1**
(43) Date of publication of application: **07.07.2004**
(21) Application number: 01970230.7
(22) Date of filing: 26.09.2001
(51) Int. Cl.: H04N 5/44, H04N 5/445, G06F 3/00

(54) **BROADCAST RECEIVER**

(71) Applicant: MITSUBISHI DENKI KABUSHIKI KAISHA, Tokyo 100-8310 (JP)
(72) Inventor: Imai, Shigeru MITSUBISHI DENKI KABUSHIKI KAISHA, Chiyoda-ku Tokyo 100-8310 (JP); Miura, Shin MITSUBISHI DENKI KABUSHIKI KAISHA, Chiyoda-ku Tokyo 100-8310 (JP)
(74) Representative: Pfenning, Meinig & Partner
(86) International application number: PCT/JP2001/008395
(87) International publication number: WO 2003/032631

(57) **Abstract**

A broadcast receiver, referring to program information obtained by a program information acquiring section (9), identifies icons associated with programs, and displays the icons on a user interface screen with establishing correspondence with the arrangement of a ten-digit keypad (21) of a remote control (13).

## Description

### TECHNICAL FIELD

The present invention relates to a broadcast receiver with a user interface screen for facilitating program selection.

### BACKGROUND ART

An EPG (Electronic Programming Guide), which is used for program selection of current BS digital broadcasting, for example, is usually configured in a matrix of cells having two axes of broadcasting time and a channel. Although such a display method includes a lot of viewable channels, it is difficult for a user to search for a desired program because a television set can display only a limited number of program information items on a screen.

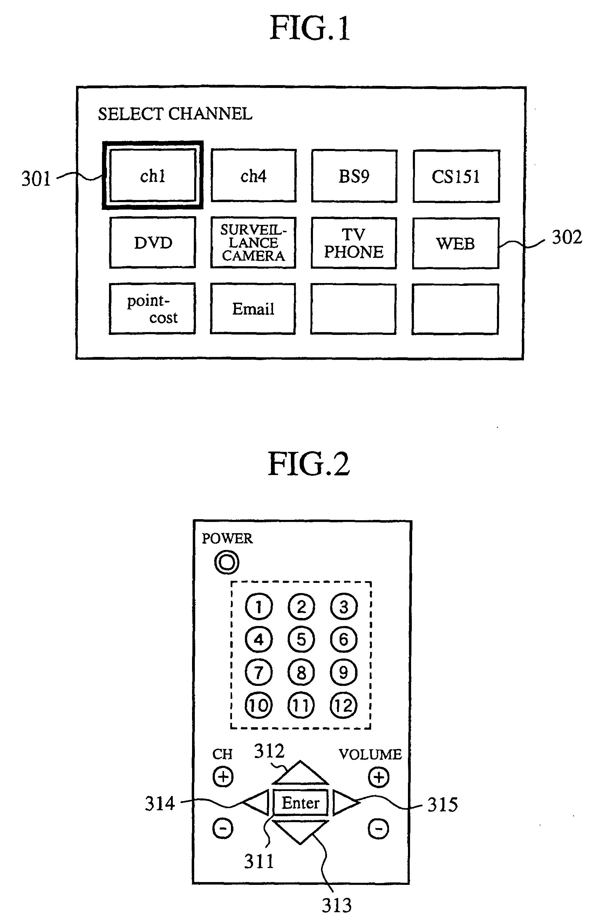

A broadcast receiver of an information display unit disclosed in Japanese patent application laid-open No. 2001-148812 offers an interface as shown in Fig. 1 for a variety of information sources including television broadcasts and other sources such as inputs from external equipment and the Internet, and allows a user to decide information to be displayed on the screen by selecting icon 301 or 302 indicating the information source with a remote control as shown in Fig. 2.

Specifically, to select the icon 301 or 302 with the remote control, the user moves a cursor with cursor movement keys 312-315 to select a desired channel, and then decides information to be displayed on the screen by depressing an enter key 311.

With the foregoing configuration, the conventional broadcast receiver has a problem of having a difficulty in carrying out "zapping" that enables the user to carry out high-speed channel switching with searching for a program of interest.

For example, to select a program indicated by the icon 302 corresponding to the WEB when the cursor is placed at the icon 301 corresponding to ch1, the user must move the cursor step by step toward right, right, down and right with the cursor movement keys 312-315, for example, and depress the enter key 311. Thus, the user must operate the buttons no less than five times in total, so that the user cannot change the channel at high speed.

The present invention is implemented to solve the foregoing problems. Therefore it is an object of the present invention to provide a broadcast receiver capable of simplifying the remote control operation of the user.

### DISCLOSURE OF THE INVENTION

The broadcast receiver in accordance with the present invention identifies icons associated with programs referring to program information obtained by program information acquiring means, and displays the icons on a user interface screen with establishing correspondence of the icons with an arrangement of channel selection buttons of a remote control.

Thus, it offers an advantage of being able to simplify the remote control operation of the user.

The broadcast receiver in accordance with the present invention can, when a program has been stored and its program information has been recorded, identify the icon associated with the program referring to the program information, and display the icon on the user interface screen with establishing correspondence of the icon with the arrangement of the channel selection buttons of the remote control.

Thus, it offers an advantage of being able to simplify the selection operation of the recorded program as that of the currently broadcast programs.

The broadcast receiver in accordance with the present invention can, when a retrieval condition is given to the program information, identify the icons associated with the programs referring to the program information satisfying the retrieval condition.

Thus, it offers an advantage of enabling the user to select a desired program quickly.

The broadcast receiver in accordance with the present invention can, even when it identifies the icons associated with the programs referring to the program information satisfying the retrieval condition, if the number of icons identified is less than the number of the channel selection buttons, identify the icons associated with the programs referring to the program information not satisfying the retrieval condition.

Thus, it offers an advantage of enabling the user to select a program not satisfying the retrieval condition.

The broadcast receiver in accordance with the present invention can, when the number of the icons associated with the programs exceeds the number of the channel selection buttons, distribute the icons to a plurality of user interface screens.

Thus, it offers an advantage of being able to handle the case where the number of the icons associated with the programs exceeds the number of the channel selection buttons.

The broadcast receiver in accordance with the present invention can switch the user interface screen to be displayed in response to an operation of a page shift key by a user.

Thus, it offers an advantage of enabling the user to select a desired program quickly, even if the number of the icons associated with the programs exceeds the number of the channel selection buttons.

The broadcast receiver in accordance with the present invention can make the icons identified by the icon display means consist of an image symbolizing a genre of the program.

Thus, it offers an advantage of enabling the user to associate the icon with the contents of the program easily by looking at the icon.

The broadcast receiver in accordance with the present invention can make the icons identified by the icon display means consist of a motion picture of the program.

Thus, it offers an advantage of enabling the user to associate the icon with the contents of the program easily by looking at the icon.

The broadcast receiver in accordance with the present invention can make the icons identified by the icon display means consist of a still picture constituting part of a motion picture of the program.

Thus, it offers an advantage of enabling the user to associate the icon with the contents of the program easily by looking at the icon.

The broadcast receiver in accordance with the present invention can associate the icons identified by the icon display means with a character string in the program information obtained by the program information acquiring means.

Thus, it offers an advantage of enabling the user to associate the icon with the contents of the program easily by looking at the icon.

The broadcast receiver in accordance with the present invention can associate the icons identified by the icon display means with a bit string in the program information obtained by the program information acquiring means.

Thus, it offers an advantage of enabling the user to associate the icon with the contents of the program easily by looking at the icon.

The broadcast receiver in accordance with the present invention can associate the icons identified by the icon display means with a character string specified by a user.

Thus, it offers an advantage of enabling the user to select the program more intuitively.

The broadcast receiver in accordance with the present invention can display symbols, which are written on the channel selection buttons of a remote control, near the corresponding icons.

Thus, it offers an advantage of enabling the user to grasp the correspondence between the channel selection buttons of the remote control and the icons easily.

The broadcast receiver in accordance with the present invention can display a motion picture of a currently selected program on the user interface screen.

Thus, it offers an advantage of enabling the user to confirm the currently selected program.

The broadcast receiver in accordance with the present invention can display program information about a currently selected program on the user interface screen.

Thus, it offers an advantage of enabling the user to confirm the program information about the currently selected program.

The broadcast receiver in accordance with the present invention can display the icon corresponding to a currently selected program distinguishingly from the icons corresponding to currently unselected programs.

Thus, it offers an advantage of enabling the user to grasp the icon corresponding to the currently selected program easily.

The broadcast receiver in accordance with the present invention can enclose the icon corresponding to the currently selected program with a block with a color higher in contrast against a background color than the icons corresponding to the currently unselected programs.

Thus, it offers an advantage of enabling the user to grasp the icon corresponding to the currently selected program easily.

The broadcast receiver in accordance with the present invention can provide the icon corresponding to the currently selected program with a three-dimensional visual effect.

Thus, it offers an advantage of enabling the user to grasp the icon corresponding to the currently selected program easily.

The broadcast receiver in accordance with the present invention can make a color tone of the icon corresponding to the currently selected program different from a color tone of the icons corresponding to the currently unselected programs.

Thus, it offers an advantage of enabling the user to grasp the icon corresponding to the currently selected program easily.

The broadcast receiver in accordance with the present invention canmake a size of the icon corresponding to the currently selected program greater than that of the icons corresponding to the currently unselected programs.

Thus, it offers an advantage of enabling the user to grasp the icon corresponding to the currently selected program easily.

The broadcast receiver in accordance with the present invention can display a specific symbol on the icon corresponding to the program recorded.

Thus, it offers an advantage of enabling the user to identify the recorded programs easily.

The broadcast receiver in accordance with the present invention can, when a user temporarily designates one or more icons, display only the icons designated by the user.

Thus, it offers an advantage of enabling the user to search for the program to be watched with narrowing the range of the programs of interest step by step.

### BRIEF DESCRIPTION OF THE DRAWINGS

Fig. 1 is a diagram illustrating a user interface screen of a conventional broadcast receiver;
Fig. 2 is a plan view showing a configuration of a remote control of the conventional broadcast receiver;
Fig. 3 is a block diagram showing a configuration of an embodiment 1 of a broadcast receiver in accordance with the present invention;
Fig. 4 is a plan view showing a configuration of a remote control 13;
Fig. 5 is a diagram illustrating a user interface screen;
Fig. 6 is a diagram illustrating icons corresponding to genres;
Fig. 7 is a diagram illustrating correspondences between the ten-digit keypad and channels;
Fig. 8 is a block diagram showing a configuration of an embodiment 2 of the broadcast receiver in accordance with the present invention;
Fig. 9 is a diagram illustrating a user interface screen;
Fig. 10 is a block diagram showing a configuration of an embodiment 3 of the broadcast receiver in accordance with the present invention;
Fig. 11 is a diagram illustrating a user interface screen;
Fig. 12 is a diagram illustrating a user interface screen;
Fig. 13 is a diagram illustrating a user interface screen;
Fig. 14 is a diagram illustrating program divisions sorted by channel numbers;
Fig. 15 is a diagram illustrating program divisions sorted by genres;
Fig. 16 is a block diagram showing a configuration of an embodiment 5 of the broadcast receiver in accordance with the present invention;
Fig. 17 is a diagram illustrating a screen when a user inputs a character string;
Fig. 18 is a block diagram showing a configuration of an embodiment 6 of the broadcast receiver in accordance with the present invention;
Fig. 19 is a diagram illustrating a state after a user checks programs of interest;
Fig. 20 is a diagram illustrating a user interface screen;
Fig. 21 is a block diagram showing a configuration of an embodiment 7 of the broadcast receiver in accordance with the present invention; and
Fig. 22 is a diagram illustrating a user interface screen.

### BEST MODE FOR CARRYING OUT THE INVENTION

The best mode for carrying out the invention will now be described with reference to the accompanying drawings to explain the present invention in more detail.

### EMBODIMENT 1

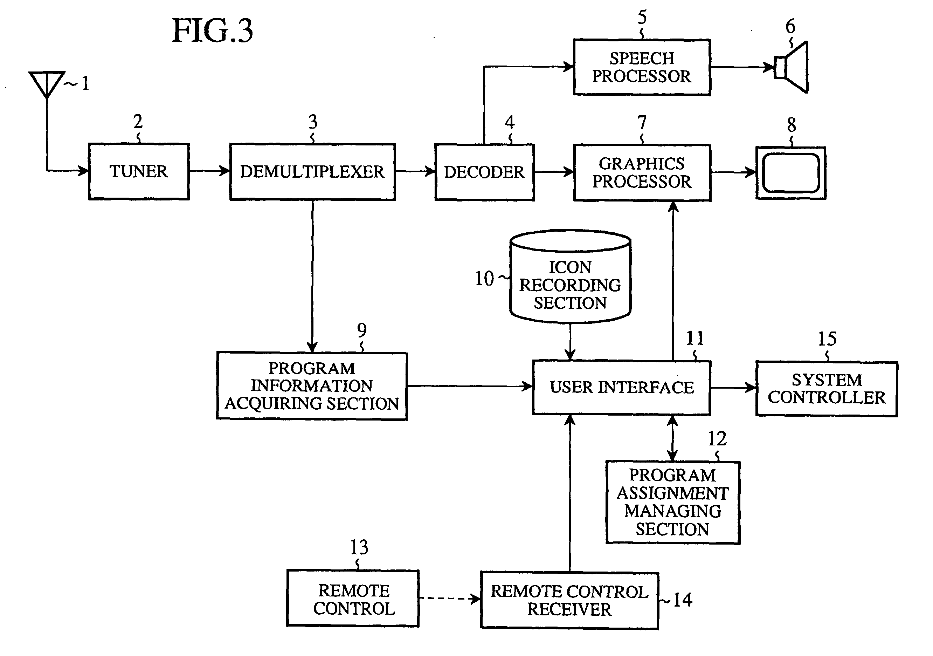

Fig. 3 is a block diagram showing a configuration of an embodiment 1 of the broadcast receiver in accordance with the present invention. In Fig. 3, the reference numeral 1 designates an antenna for receiving broadcast waves; 2 designates a tuner for extracting from the broadcast waves a stream including a program selected; 3 designates a demultiplexer for separating the video-audio data of the desired program and the program information of all the channels from the stream extracted by the tuner 2; 4 designates a decoder for decoding the video-audio data of the program separated by the demultiplexer 3; 5 designates a speech processor for converting the speech data decoded by the decoder 4 to an electric signal to be fed to a speaker 6; 6 designates the speaker; 7 designates a graphics processor for combining the video data decodedby the decoder 4 anduser interface screen data output from a user interface 11, and for converting the resultant data to a form suitable for the input to a display unit 8; and 8 designates the display unit.

The reference numeral 9 designates a program information acquiring section (program information acquiring means) for collecting program information about programs broadcast at present or in the future, which are separated by the demultiplexer 3, and for storing them for a certain time period; 10 designates an icon recorder for storing icons associated with a variety of programs; and 11 designates the user interface for identifying the icons associated with the programs by referring the program information obtainedby the program information acquiring section 9, and for displaying the icons on the user interface screen with providing correspondence between the icons and placement of the channel selection buttons of a remote control. The user interface 11, receiving a remote control code froma remote control receiver 14, acquires channel assignment information about the icon corresponding to the remote control code from a program assignment management section 12, and executes a processing of sending a channel switching instruction to a system controller 15.

The icon recorder 10 and user interface 11 constitute an icon display means.

The reference numeral 12 designates the program assignment management section for managing the assignment of the icons to the channel selection buttons of the remote control 13; 13 designates the remote control for a user to operate the broadcast receiver; 14 designates the remote control receiver for converting an infrared signal transmitted from the remote control 13 to an electric signal (remote control code) , and for supplying the remote control code to the user interface 11; and 15 designates the system controller for changing a channel to be displayed in accordance with the channel switching instruction fed from the user interface 11.

The user interface 11, program assignment management section 12, remote control receiver 14 and system controller 15 constitute a program selection means.

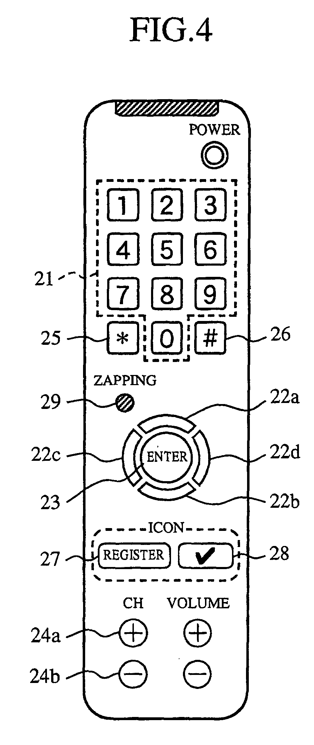

Fig. 4 is a plan view showing a configuration of the remote control 13. In Fig. 4, the reference numeral 21 designates a ten-digit keypad (channel selection buttons) ; reference numerals 22a-22d designate direction keys; the reference numeral 23 designates a decision key; 24a designates a channel-up key; 24b designates a channel-down key; reference numerals 25 and 26 designate a page shift key used when an icon set extends over a plurality of pages; 27 designates an icon registration button; 28 designates an icon-check button; and 29 designates a zapping mode shift key used for switching the normal TV-watching mode to the zapping mode.

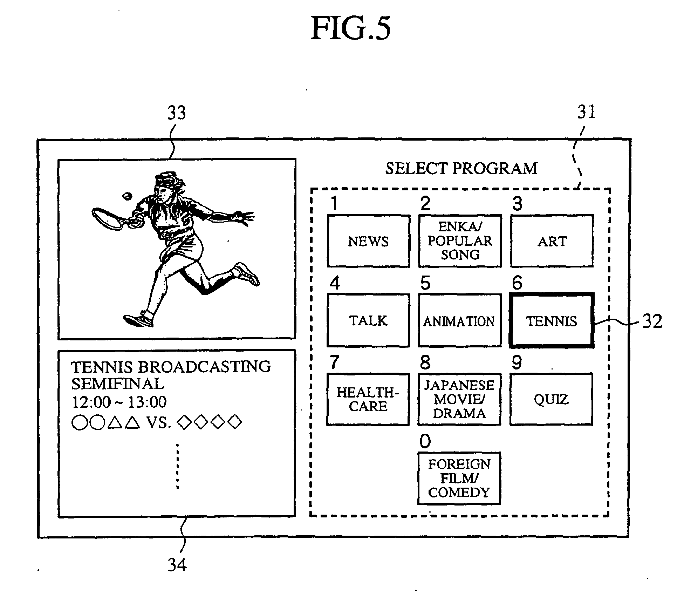

Fig. 5 is a diagram showing a user interface screen. In Fig. 5, the reference numeral 31 designates an icon set corresponding to the arrangement of the ten-digit keypad 21 of the remote control 13; 32 designates a cursor indicating a currently selected icon; 33 designates a motion picture of the program corresponding to the currently selected icon; and 34 designates the program information of a program corresponding to the currently selected icon.

Next, the operation of the present embodiment 1 will be described.

When the user depresses the zapping mode shift key 29 in the normal TV-watching mode, the remote control receiver 14 receives the infrared signal from the remote control 13, and supplies the user interface 11 with the remote control code indicating the depression of the zapping mode shift key 29.

Receiving the remote control code from the remote control receiver 14, the user interface 11 detects the depression of the zapping mode shift key 29, and checks currently broadcast programs or soon-to-be-broadcast programs by capturing the program information from the program information acquiring section 9.

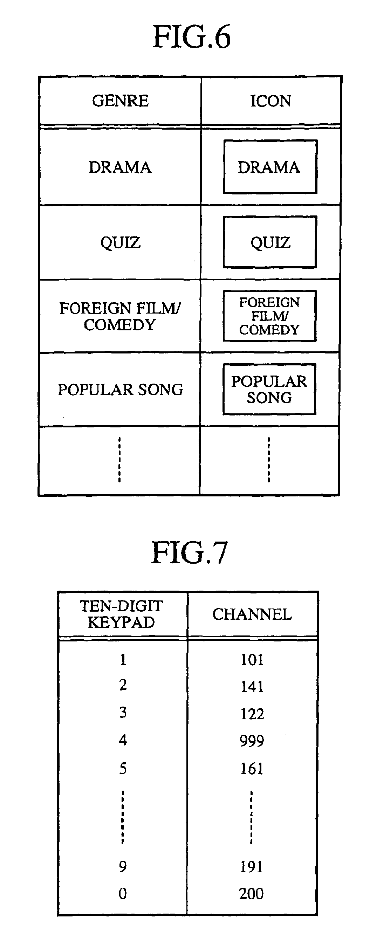

Then, referring to the genre information in the program information, the user interface 11 acquires the icons corresponding to the genres of the individual programs from the icon recorder 10 (see, Fig. 6).

In this case, although the icons are associated with the genre information consisting of character strings, they can also be associated with particular bits in the program information, for example. In addition, although the icons shown in Fig. 6 each consist of the name of the genre enclosed in a block, they can also consist of a symbol of the genre such as a bat and ball for baseball and a soccer ball for soccer. Furthermore, the icons can each consist of part of the program name.

Acquiring the icons corresponding to the genres of the individual programs, the user interface 11 displays on the user interface screen the icons of the currently broadcast programs in a one-to-one correspondence with the buttons of the ten-digit keypad 21 on the remote control 13. In addition, to facilitate understanding of the user of the correspondence between the buttons of the ten-digit keypad 21 and the icon set 31, the user interface 11 displays the numbers of the buttons of the ten-digit keypad 21 near the individual icons.

In this case, the icons of the individual programs are disposed in correspondence with the button numbers 1, 2, 3, ..., 8, 9, and 0 of the ten-digit keypad 21 with reference to the channel numbers and genres of the programs, or to the ratings of the user for the programs.

The user interface 11 assigns the programs to the buttons of the ten-digit keypad 21 of the remote control 13. Then, referring to the information on the programs, the user interface 11 carries out the assignment of the channels to the buttons of the ten-digit keypad 21 as shown in Fig. 7, and instructs the program assignment management section 12 to store and manage the assignment information of the channels to the buttons.

Subsequently, in response to the remote control operation of the user through the ten-digit keypad 21, the user interface 11 receives the remote control code from the remote control receiver 14. Then, the user interface 11 asks the program assignment management section 12 about the channel corresponding to the operated button of the ten-digit keypad 21.

Receiving the reply to the corresponding channel from the program assignment management section 12, the user interface 11 supplies the system controller 15 with an instruction to switch to the channel.

The system controller 15, receiving the channel switching instruction from the user interface 11, controls the tuner 2 and demultiplexer 3 in accordance with the switching instruction, and changes the program displayed on the display unit 8 to the program of the channel designated.

In the example of Fig. 5, the motion picture 33 of the selected channel is processed by the graphics processor 7 in such a manner that it is combined with the user interface, and displayed on the same screen as the selected icon. In addition, the user interface 11 constructs the user interface screen such that the program information 34 corresponding to the selected icon is displayed on the same screen as the icon set 32 and motion picture 33.

The user interface 11 sends a switching requirement of the channel to the system controller 15, and adjusts the cursor 32 to the icon selected by the user.

Incidentally, the user interface screen is configured such that the icon selected by the user is distinguished clearly from the other icons by the following processing: enclosing the selected icon by a block with a color sharply contrasted against a background color; producing three-dimensional visual effects to provide the icon selected by the user with a stereoscopic appearance; making the size of the icon selected by the user greater than that of the other icons; or varying the color tone of the selected icon from that of the other icons.

In the example of Fig. 5, the icon corresponding to the button "6" of the ten-digit keypad 21 is selected, and is enclosed with a block with a color contrasted sharply against the background color.

Although the user selects the program by directly depressing one of the buttons of the ten-digit keypad with reference to the icons displayed, this is not essential. For example, the user can select the program by moving the cursor with the direction keys 22a-22d, and then select the program by the decision key 23. Alternatively, the user can select the program by depressing the channel-up key 24a or channel-down key 24b. In the example of Fig. 5, since the cursor 32 is placed on the icon corresponding to the button "6", depressing the channel-up key 24a causes the cursor 32 to move on the icons in the order of 7, 8, 9, 0, 1, 2, .... In contrast, depressing the channel-down key 24b causes the cursor 32 to move on the icons in the order of 5, 4, 3, 2, 1, 0, 9, ....

As described above, displaying the user interface screen, which shows the icons in such a fashion that they correspond to the arrangement of the ten-digit keypad 21 of the remote control 13, enables the user to visually obtain general information about the programs by the icons. Thus, the user can carry out the zapping of selecting the program at high speed by operating the ten-digit keypad 21. In addition, using the direction keys 22a-22d or channel-up/channel-down keys 24a and 24b enables the user to conduct the conventional operation.

### EMBODIMENT 2

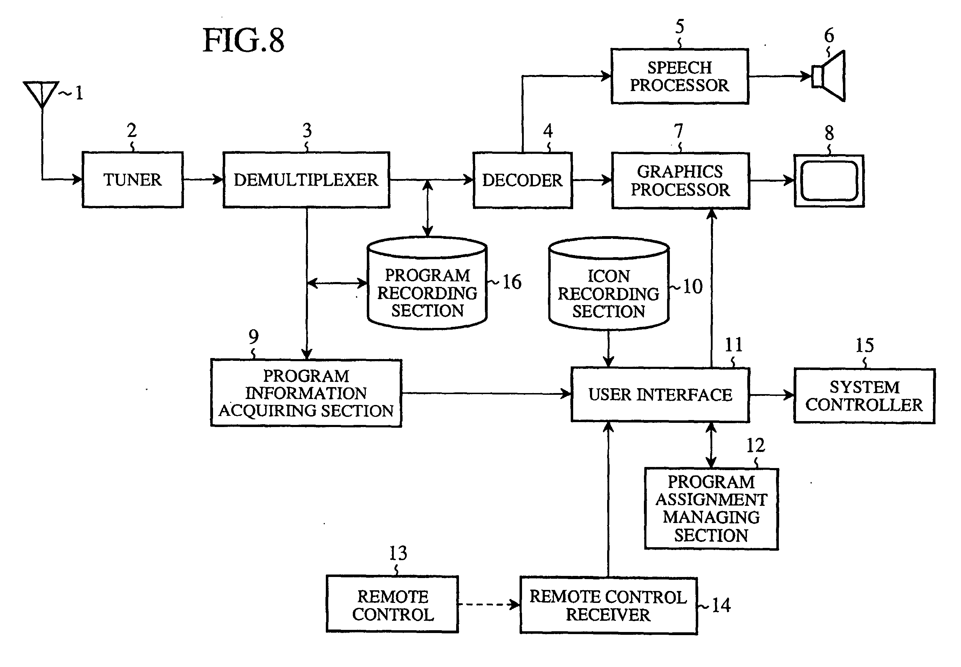

Fig. 8 is a block diagram showing a configuration of an embodiment 2 of the broadcast receiver in accordance with the present invention. In Fig. 8, since the same reference numerals designate the same or like portions to those of Fig. 3, the description thereof is omitted here.

The reference numeral 16 designates a program recorder for recording the video-audio data and program information demultiplexed by the demultiplexer 3.

Next, the operation of the present embodiment 2 will be described.

Receiving an instruction to record a program from the user, the user interface 11 issues a program recording request to the system controller 15, and the system controller 15 controls the tuner 2, demultiplexer 3, program information acquiring section 9 and program recorder 16 to record the designated program. In this case, the program recorder 16 stores the predecoded video-audio data, which is demultiplexed by the demultiplexer 3, in connection with the program information.

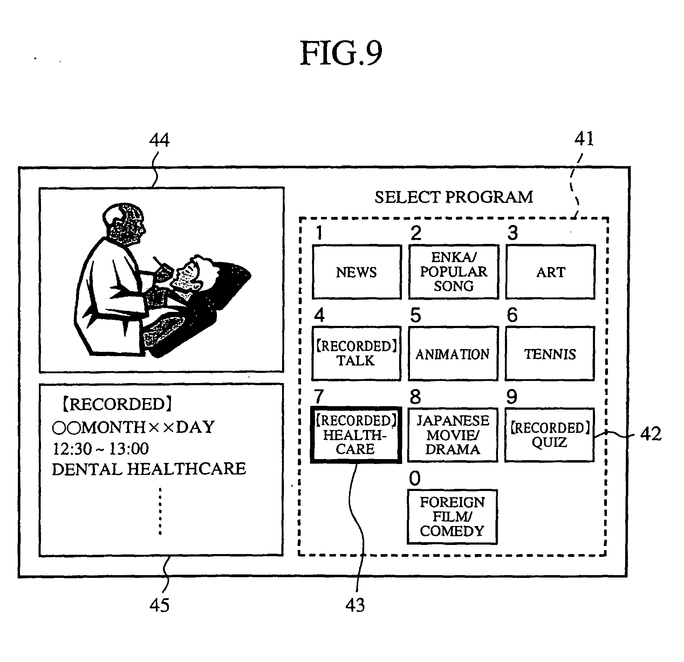

As for the recorded programs, the present embodiment 2 can also provide the user interface screen including icons as in the foregoing embodiment 1 (see, Fig. 9).

More specifically, the user interface 11 acquires the program information stored in the program recorder 16 via the program information acquiring section 9, and obtains the icon corresponding to the genre of the program from the icon recorder 10 with reference to the genre information included in the program information (see, Fig. 6).

The program information acquired in this case includes the reproducible position of the program recorded in the program recorder 16. The reproducible position refers to the start position of the recording of the recorded program. Alternatively, by recording the reproduction history of recorded programs by the program recorder 16, the reproducible position can be given as the final position of the program that has been watched last.

In addition, the user interface 11 adds to the icon a word or symbol indicating that the program is being recorded to distinguish it from other currently broadcast programs. The reference numeral 42 of Fig. 9 designates an example of an icon of a recorded program, to which a word "recorded" is added to indicate that it is being recorded.

The user interface 11 can also acquire the icons for the other currently broadcast programs in the same manner as the foregoing embodiment 1. Thus, the user interface 11 disposes on the user interface screen the icons corresponding to the currently broadcast programs and recorded programs in such a manner that the icons have one-to-one correspondence with the buttons of the ten-digit keypad 21 of the remote control 13. The icons constitute an icon set 41. In this case, the icons of the individual programs are arranged in the order of the button numbers 1, 2, 3, ..., 8, 9 and 0 in accordance with the channel numbers and genres of the programs, or with the ratings of the user for the programs.

In the foregoing embodiment 1, the assignment of the channels to the buttons of the ten-digit keypad 21 is stored and managed by the program assignment management section 12. On the other hand, as for the recorded programs in the present embodiment 2, the user interface 11 issues a request to store and manage the relationships between the buttons of the ten-digit keypad 21 and the reproducible positions of the recorded programs to the program assignment management section 12.

When the user inputs a request to select one of the recorded programs, the user interface 11 moves the cursor 43 on the icon of the recorded program, and acquires the reproducible position of the recorded program corresponding to the button from the program assignment management section 12.

Then, the user interface 11 requires the system controller 15 to reproduce the recorded programwith designating the position on the program recorder 16. In the example of Fig. 9, the motion picture 44 of the recorded program corresponding to the selected icon is combined with the user interface by the graphics processor 7 to be displayed with the selected icon on the same screen. In addition, the user interface 11 configures the user interface screen in such a fashion that the program information 45 about the recorded program corresponding to the selected icon is displayed together with the icon set 41 and motion picture 44 on the same screen.

As described above, configuring the user interface screen, which shows the icons in such a fashion that they correspond to the arrangement of the ten-digit keypad 21 of the remote control 13, enables the user to visually obtain general information about the programs by the icons. Thus, the user can carry out the zapping of selecting the program at high speed by operating the ten-digit keypad 21. In addition, displaying the icons corresponding to the recorded programs and currently broadcast programs at the same time enables the user to select a desired program at that time without distinguishing the recorded programs from the currently broadcast programs.

### EMBODIMENT 3

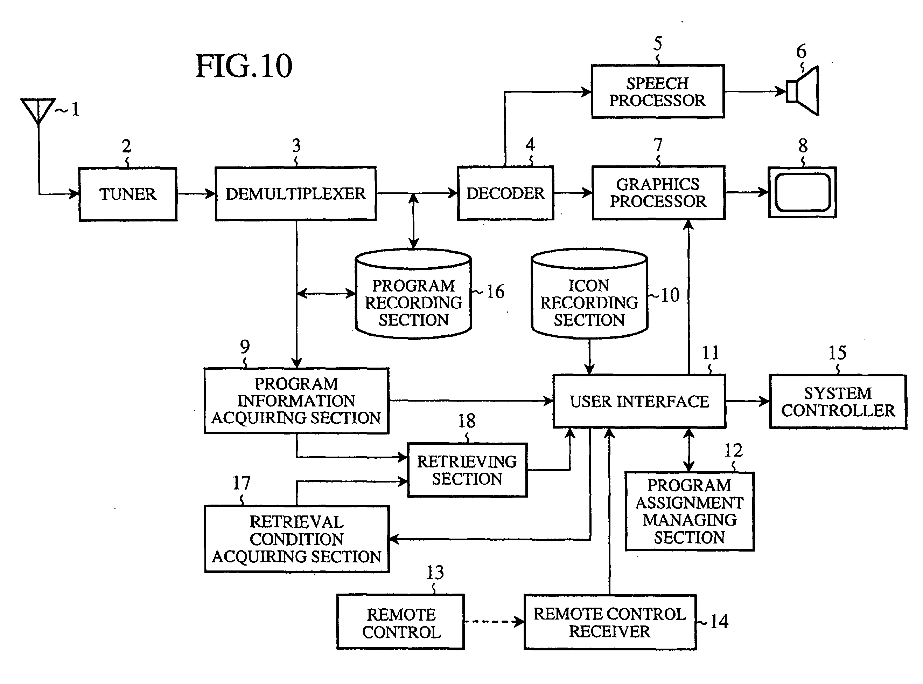

Fig. 10 is a block diagram showing a configuration of an embodiment 3 of the broadcast receiver in accordance with the present invention. In Fig. 10, since the same reference numerals designate the same or like portions to those of Fig. 8, the description thereof is omitted here.

The reference numeral 17 designates a retrieval condition acquiring section for acquiring a retrieval condition for the program information from the user via the user interface 11; and 18 designates a retrieving section for retrieving the program information meeting the retrieval condition from the program information acquiredby the program information acquiring section 9, and for outputting the program information to the user interface 11. The retrieval condition acquiring section 17 and retrieving section 18 constitute an icon display means.

Next, the operation of the present embodiment 3 will be described.

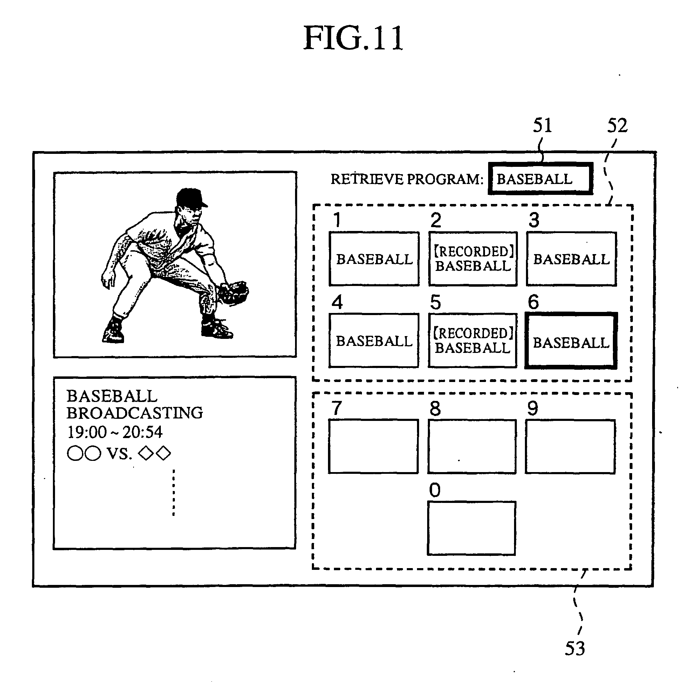

Fig. 11 illustrates a user interface screen when carrying out the program retrieval and program selection. When the user inputs the retrieval condition into a retrieval condition box 51 on the user interface screen, the retrieval condition acquiring section 17 obtains the retrieval condition via the user interface 11.

In the example of Fig. 11, the user inputs a genre "baseball" as the retrieval condition, and thus programs with the genre "baseball" including recorded programs are displayed as an icon set 52. Although the genre is designated as the retrieval condition, the retrieval condition can be designated by any other desired character strings.

The retrieving section 18 obtains the program information about the currently broadcast programs or programs stored in the program recorder 16 from the program information acquiring section 9, and carries out the program retrieval using the retrieval condition obtained by the retrieval condition acquiring section 17.

The user interface 11 obtains identifiers of the programs matching the retrieval condition in the retrieving section 18, and extracts the corresponding program information from the program information obtained from the program information acquiring section 9 by the identifiers.

Subsequently, the user interface 11 generates the icon set 52 as illustrated in Fig. 11 by assigning the icons corresponding to the program information to the buttons of the ten-digit keypad 21 in ascending numeric order. In the example of Fig. 11, the icons of the programs mismatched the retrieval condition are neglected so that vacant icons are assigned to an icon set 53. Selecting any one of icons of the icon set 53 does not activate the program selection.

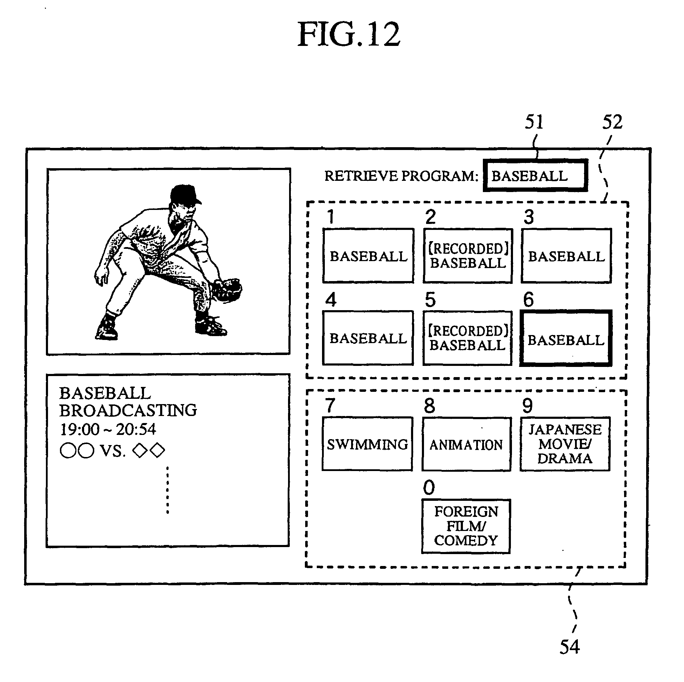

Alternatively, as illustrated in Fig. 12, icons of programs mismatched the retrieval condition can constitute the user interface screen as an icon set 54, thereby enabling the user to select any one of the programs corresponding to the icons in the icon set 54.

Once the icons constituting the user interface screen have been decided after the retrieval, the user interface 11 issues a request to the program assignment management section 12. As for the currently broadcast programs, the user interface 11 requests the program assignment management section 12 to assign channels to the buttons of the ten-digit keypad 21, and as for the recorded programs, it requests it to store and manage the reproducible positions of the programs in the program recorder 16.

As described above, the present embodiment 3 can retrieve the programs from among the currently broadcast programs and recorded programs in accordance with the genre or character string, and display the icons in correspondence with the arrangement of the buttons of the ten-digit keypad 21 of the remote control 13 immediately after the program retrieval. Thus, it can configure the user interface screen that enables the user to carry out the program selection. As a result, the present embodiment 3 enables the user to carry out the zapping of selecting the program at high speed by operating the ten-digit keypad after considerably reducing the number of programs from the large number of programs by using the genre or character string.

### EMBODIMENT 4

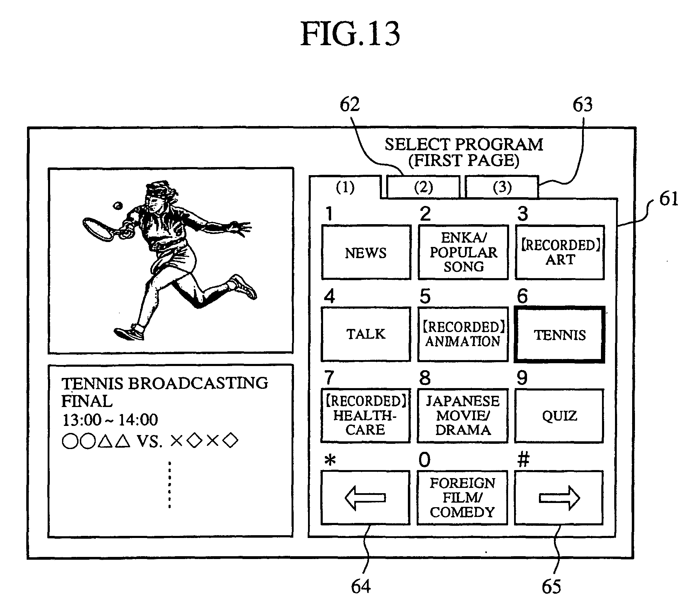

Although not mentioned in the foregoing embodiments 1-3, the number of the user selectable programs can exceed the number of buttons of the ten-digit keypad 21 as shown in Fig. 4 in the multichannel broadcasting such as digital broadcasting. In addition, the number of the programs can exceed the number of buttons of the ten-digit keypad 21 in the case where the program selection is made for the mixture of the recorded programs and currently broadcast programs by the icon display as in the foregoing embodiment 3. In such cases, the icons are displayed over a plurality of pages as illustrated in Fig. 13.

First, the user interface 11 checks the number of user selectable programs from the program information obtained by the program information acquiring section 9. If that number exceeds the number of the buttons of the ten-digit keypad 21 of the remote control 13 (that is, greater than 10), the user interface 11 rearranges the user selectable programs in accordance with the channel numbers or genres of the programs, or with the ratings of the user for the programs, and assigns every 10 programs to each page.

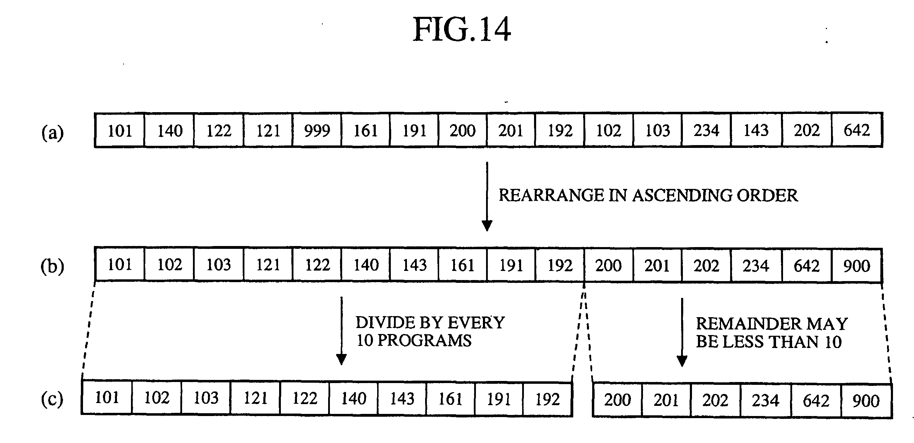

Fig. 14 is a diagram illustrating a state of the programs rearranged by channel numbers. Fig. 14(a) illustrates programs before the rearrangement, and the numerals therein indicate the channel numbers. Fig. 14(b) illustrates the state after rearranging the programs of Fig. 14(a) in ascending order of the channel numbers. As illustrated in Fig. 14(c), the programs are divided every 10 items from the top to be assigned to each page. The finally remaining programs equal to or less than 10 are also assigned to one page. In the example of Fig. 14, the number of pages to which the programs are assigned becomes two.

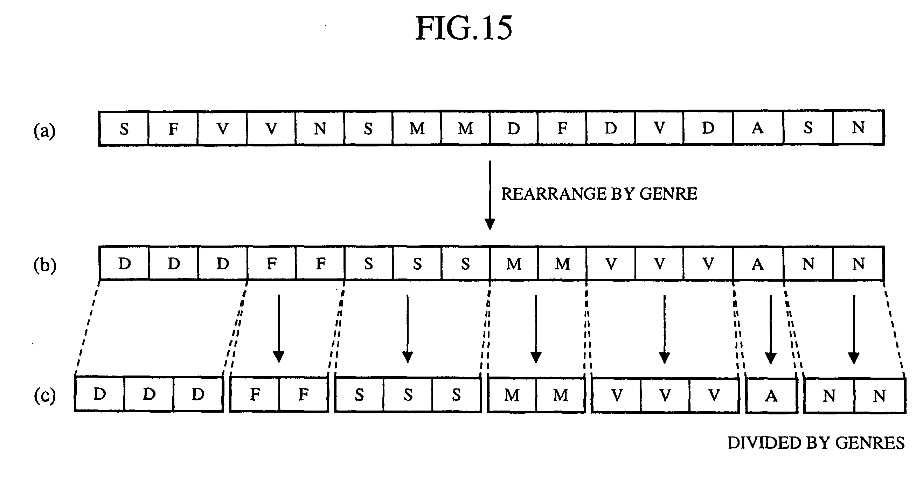

On the other hand, Fig. 15 is a diagram illustrating a state of the programs rearranged and divided by genres. In this case, the user interface 11 issues a genre-specific retrieval request to the retrieval condition acquiring section 17, and the retrieving section 18 carries out the retrieval of the program information about the recorded programs and currently broadcast programs.

Fig. 15(a) illustrates programs before the rearrangement, in which letters "D" designates a drama, "F" designates a movie, "S" designates a sport, "M" designates music, "V" designates a variety show, "A" designates an animation and "N" designates news. Fig. 15(b) illustrates a state in which the programs shown in Fig. 15(a) are rearranged by the genres. The programs are divided by genres as illustrated in Fig. 15(c) to be assigned to individual pages. In the example of Fig. 15, the programs are assigned to seven pages.

As described above, after obtaining the icons corresponding to the programs for each page, the user interface 11 generates the icon sets 61, 62 and 63 with establishing correspondence between the icons and the buttons of the ten-digit keypad 21. Subsequently, the user interface 11 sends a request to the program assignment management section 12 to store and manage, for the individual buttons of the ten-digit keypad 21, the channels as to the currently broadcast programs and the positions in the program recorder 16 as to the recorded programs. The program assignment information managed by the assignment management section 12 is assigned an index for each page so that the information can be obtained on a page-by-page basis.

Fig. 13 illustrates an example of the user interface screen that displays the icons over three pages. In Fig. 13, the reference numeral 61 designate an icon set on a first page, 62 designate an icon set on a second page, 63 designate an icon set on a third page, 64 designates an icon for shifting pages in descending order of the page numbers, and 65 designates an icon for shifting pages in ascending order of the page numbers.

The user interface 11 configures the icon set 61 on the first page on the user interface screen as illustrated in Fig. 13, first. In this case, the user interface 11 assigns the icon 64 for shifting the pages in descending order to the "*" button (page shift key 25) of the remote control 13 as shown in Fig. 4, and places the icon 64 on the user interface screen such that its position corresponds to the position of the "*" button on the remote control 13. Likewise, the user interface 11 assigns the icon 65 for shifting the pages in ascending order to the "#" button (page shift key 26) of the remote control 13, and places the icon 65 on the user interface screen such that its position corresponds to the position of the "#" button on the remote control 13.

When one of the buttons 0-9 of the ten-digit keypad 21 is depressed on the user interface screen as shown in Fig. 13, the user interface 11 acquires the program assignment information about the individual buttons of the of the ten-digit keypad 21 on the first page from the program assignment management section 12, and instructs the system controller 15 to switch the channel or to reproduce the program.

When the "#" button is depressed in the state in which the icon set of the first page is displayed as shown in Fig. 13, the user interface 11 displays the icon set 62 of the second page, which has been acquired in advance. When one of the buttons 0-9 of the ten-digit keypad 21 is depressed in the state in which the icon set 62 of the second page is displayed, the user interface 11 acquires the program assignment information about the depressed button on the second page from the program assignment management section 12, and instructs the system controller 15 to switch the channel or to reproduce the program.

On the other hand, when the "*" button is depressed in the state in which the icon set of the first page is displayed, the user interface 11 displays the icon set 63 of the third page, which has been acquired in advance. When one of the buttons 0-9 of the ten-digit keypad 21 is depressed in the state in which the icon set 63 of the third page is displayed, the user interface 11 acquires the program assignment information about the depressed button on the third page from the program assignment management section 12, and instructs the system controller 15 to switch the channel or to reproduce the program.

When the "#" button is depressed in the state in which the first page is displayed, the page is changed such as 2→3→1 →2→... . On the contrary, when the "*" button is depressed, the page is changed as 3→2→1→3→... .

As described above, even if the number of selectable programs exceeds the number of the buttons of the ten-digit keypad 21 when configuring the user interface screen, which displays the icons in such a fashion that they correspond to the arrangement of the ten-digit keypad 21 of the remote control 13, the present embodiment 4 canprovide the user interface screen that can display the icons over a plurality of pages by dynamically changing the channel assignment to the ten-digit keypad 21; and that can carry out zapping of selecting the program at high speed with moving between pages. In addition, adding the buttons that enable the shift between the pages by one depression of the buttons can reduce the burden on the user.

### EMBODIMENT 5

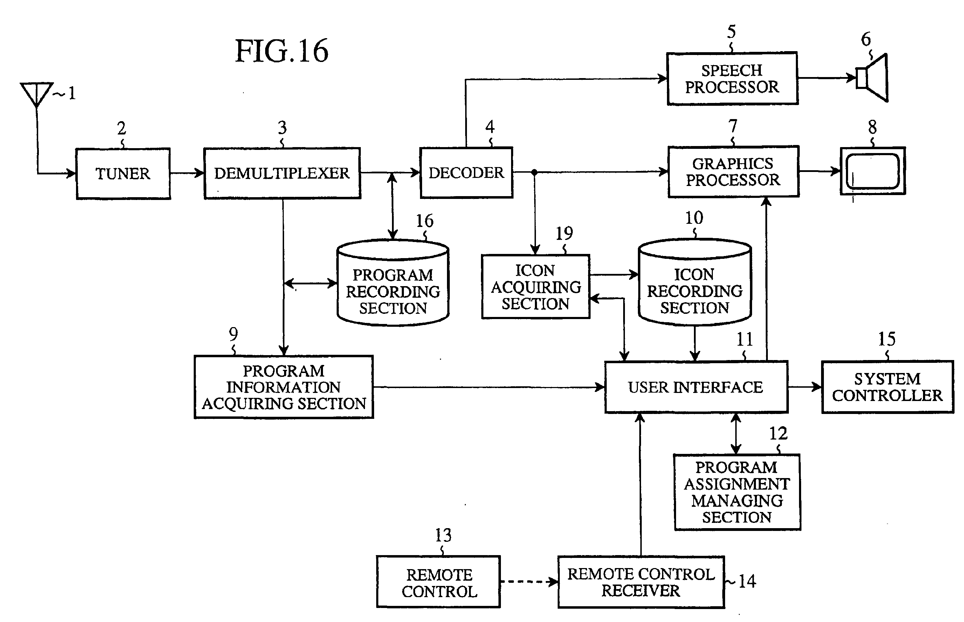

Fig. 16 is a block diagram showing a configuration of an embodiment 5 of the broadcast receiver in accordance with the present invention. In Fig. 16, since the same reference numerals designate the same or like portions to those of Fig. 8, the description thereof is omitted here.

The reference numeral 19 designates an icon acquiring section for storing icons into the icon recorder 10 with establishing correspondence between a still picture constituting part of a motion picture, that is, the video data decoded by the decoder 4, and the character string from the user obtained via the user interface 11.

Next, the operation of the present embodiment 5 will be described.

When the user depresses the icon registration button 27 of the remote control 13 while watching one of the currently broadcast programs and recorded programs, the user interface 11 sends an icon acquisition request to the icon acquiring section 19. Receiving the icon acquisition request, the icon acquiring section 19 captures from the motion picture output from the decoder 4 the still picture displayed at the time when the user depresses the icon registration button 27.

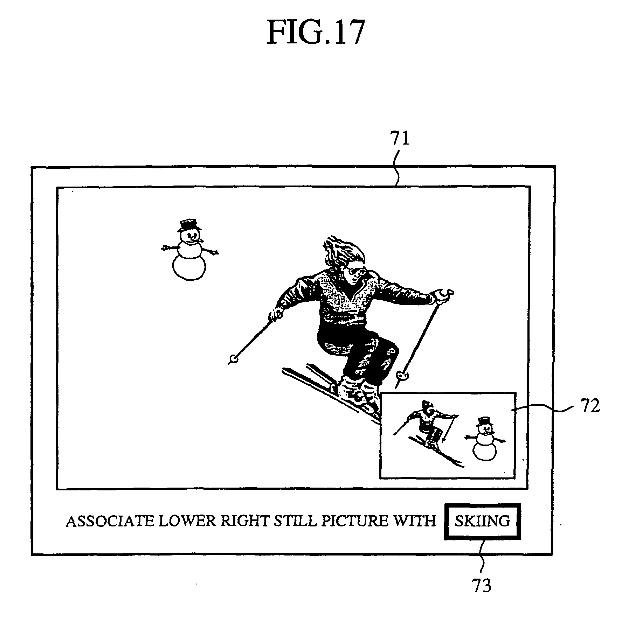

Then, the user interface 11 obtains the still picture captured by the icon acquiring section 19, and configures apicture as shown in Fig. 17. In Fig. 17, the reference numeral 71 designates a motion picture of one of the currently broadcast programs and reproduced programs, and 72 designates the still picture displayed when the user depresses the icon registration button 27. The still picture 72 is displayed in a smaller size to facilitate building up an image when it is made an icon. The reference numeral 73 designates a character string captured from the user to be associatedwith the still picture 72. In the example of Fig. 17, the user inputs "skiing" as the character string 73 for the still picture 72.

After capturing the character string 73 to be associated with the still picture 72 from the user, the user interface 11 sends the character string 73 to the icon acquiring section 19. The icon acquiring section 19 associates the still picture 72 stored within it in advance with the character string 73, and registers the still picture 72 to the icon recorder 10 as the icon as illustrated in Fig. 6.

When the user interface 11 generates the icon set to form the user interface screen, it retrieves from the icon recorder 10 the icon with the character string matching the target program information to be selected. In this case, the icon recorder 10 registers the icons corresponding to genres in advance as described in the foregoing embodiment 1. Accordingly, when capturing an icon for the program, two icons, the icon registered by the user and the icon corresponding to the genre registered in advance, can match the single program. In this case, the priority given to the icons is as follows:
icon corresponding to genre < icon registered by user

When a plurality of icons registered by the user correspond to the single program, the icon to be selected for the program is the final icon the user registers.

As described above, the present embodiment 5 associates the still picture, which is selected by the user from the motion picture of one of the currently broadcast programs and reproduced programs, with a specific character string, and uses the still picture as the icon for selecting the program. Accordingly, the user can visually recognize the program of interest by the still picture selected from the program. Thus, the user can carry out the program selection more intuitively by using it.

### EMBODIMENT 6

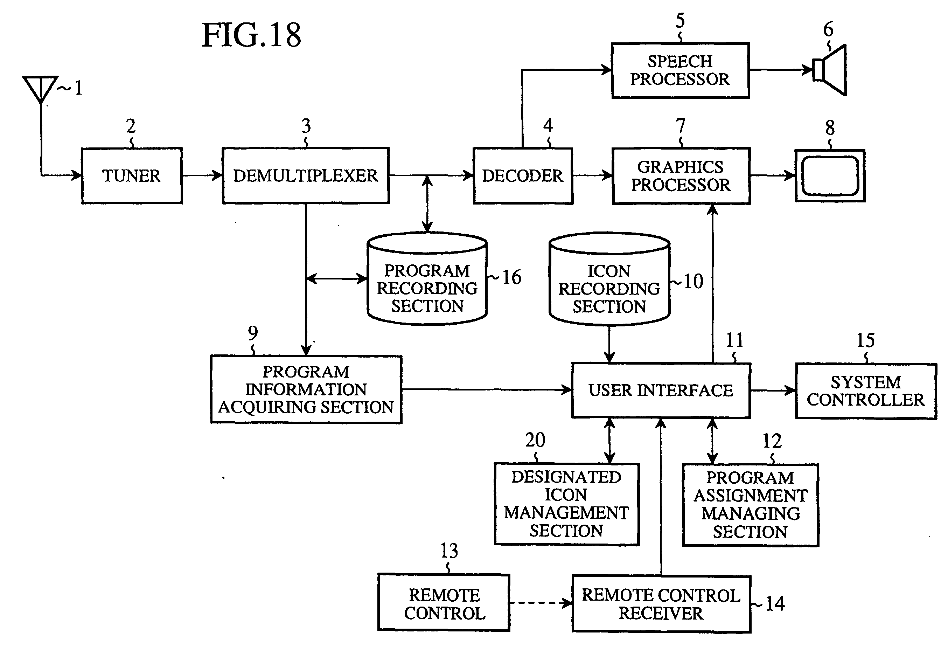

Fig. 18 is a block diagram showing a configuration of an embodiment 6 of the broadcast receiver in accordance with the present invention. In Fig. 18, since the same reference numerals designate the same or like portions to those of Fig. 8, the description thereof is omitted here.

The reference numeral 20 denotes a designated icon management section for managing the icons on the user interface screen, which are specified by the user.

The user sometimes selects the program by comparing candidate programs among a great number of selectable programs. However, when selecting the program from among the icons associated with the lot of programs and extending over several pages as described in the foregoing embodiment 4, it is not easy for the user to memorize which programs of interest correspond to which icons once the user has shifted the pages.

To circumvent the problem, the present embodiment 6 enables the user to check the icons of the programs of interest, and then to display the checked icons collectively.

Next, the operation of the present embodiment 6 will be described.

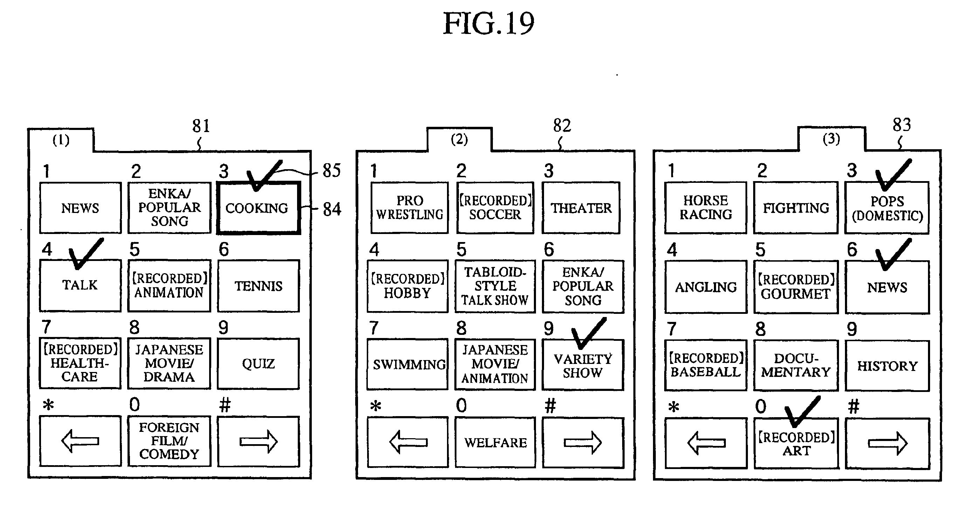

Fig. 19 is a diagram illustrating the state in which the user has checked the programs of interest on the user interface screen including a plurality of pages as described in the foregoing embodiment 4.

In Fig. 19, the reference numeral 81 designates an icon set of the first page; 82 designates an icon set of the second page; 83 designates an icon set of the third page; 84 designates a cursor indicating the currently selected icon; and 85 designates a check mark displayed by depressing the icon-check button 28 of the remote control 13.

The user checks icons over a plurality of pages by moving the cursor 84 onto desired icons with the ten-digit keypad 21 or the direction keys 22a-22d, and by depressing the icon-check button 28. The user interface 11 acquires the information about the icons thus checked, and instructs the designated icon management section 20 to record and manage these icons. In this case, the designated icon management section 20 manages the information about the page numbers and the button numbers corresponding to the positions of the icons in the pages to identify the individual icons checked. For example, since the icon set 81 in Fig. 19 includes two icons designated by the check mark 85, the designated icon management section 20 manages the following information in connection with the two icons.
first page, button number 3, and
first page, button number 4.

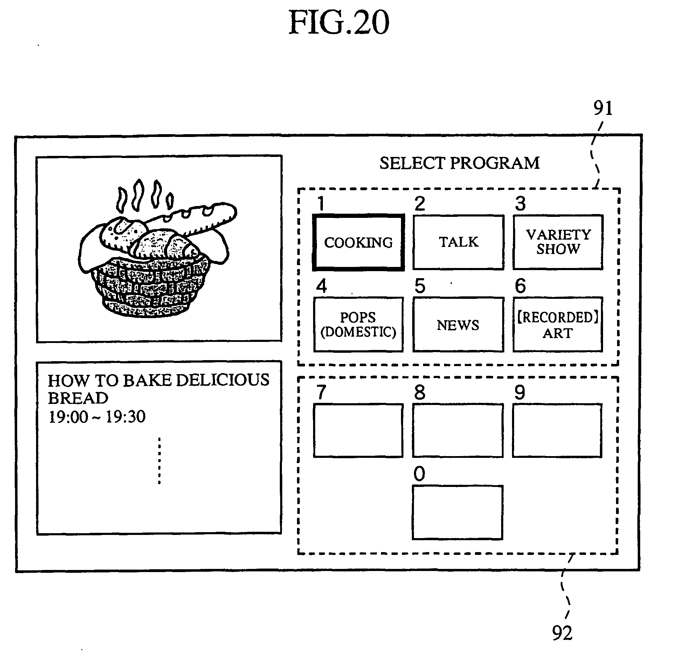

When the user continues to depress the icon-check button 28 for a few seconds in the state where the icons have been checked, the user interface 11 provides the user interface screen as shown in Fig. 20. Thus, the user can select a program from the limited number of icons the user has checked. In Fig. 20, the reference numeral 91 designates an icon set consisting of the icons checked in Fig. 19, and 92 designates a vacant icon set without any corresponding programs. Even if the user selects any of the icons in the vacant icon set, no program selection is made.

Next, the method will be described of configuring the user interface screen as shown in Fig. 20 by the user interface 11.

Detecting that the user continues to depress the icon-check button 28 for a few seconds in the state where the icons have been checked, the user interface 11 acquires the page numbers and button numbers of the icons checked by the user, which are managed by the designated icon management section 20.

Subsequently, as the icon set 91 shown in Fig. 20, the user interface 11 assigns the icons checked by the user to the buttons of the ten-digit keypad in ascending order of the button numbers. More specifically, the icon set 91 is formed by assigning the icons successively to the button numbers 1-6. On the other hand, the positions corresponding to the button numbers 7-9 and 0 are not assigned any effective icons, thereby remaining vacant. Finally, as for the icons to which the effective programs are assigned, the user interface 11 instructs the program assignment management section 12 to record and manage the channels corresponding to the button numbers for the currently broadcast programs and the reproducible positions in the program recorder 16 for the recorded programs.

The foregoing configuration, which enables the user to check the icons to reconstruct the user interface screen for the program selection with the icons checked, is not only applicable to the case where the icons are displayed over the plurality of pages as in the foregoing embodiment 4, but also to the case where the icons are displayed in a single page.

As described above, the present embodiment 6 is configured such that when constructing the user interface screen for displaying the icons in correspondence with the arrangement of the ten-digit keypad 21 of the remote control 13, it enables the user to check the icons of interest during the program selection, and reconstructs the user interface screen for the user to select the program from the icons checked. As a result, the user can search for the program with narrowing the programs step by step.

### EMBODIMENT 7

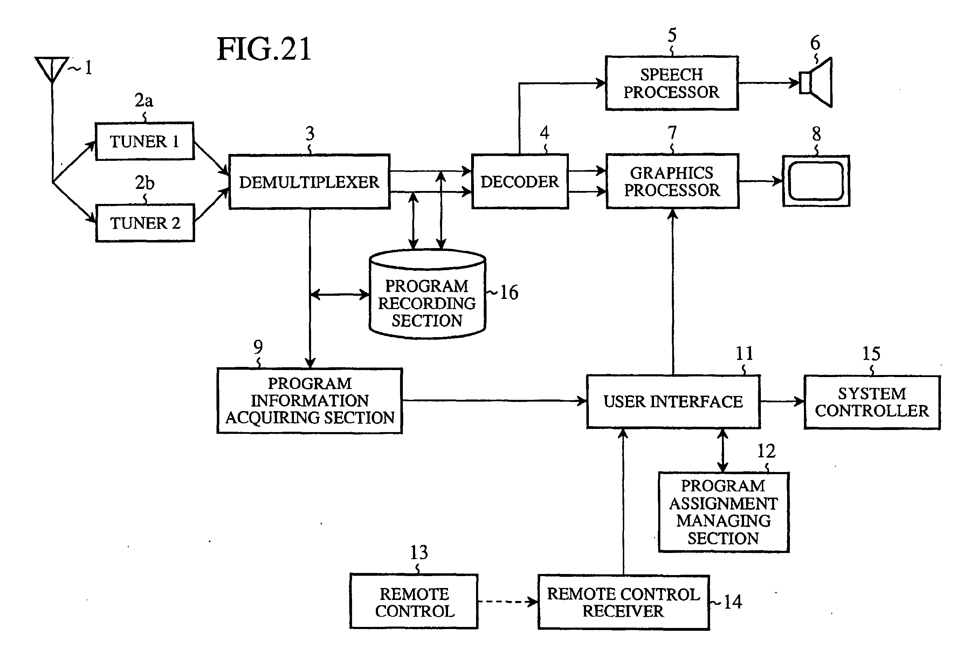

Fig. 21 is a block diagram showing a configuration of an embodiment 7 of the broadcast receiver in accordance with the present invention. In Fig. 21, since the same reference numerals designate the same or like portions to those of Fig. 8, the description thereof is omitted here.

In Fig. 21, reference numerals 2a and 2b each designates a tuner for tuning to a program independently of each other.

Next, the operation of the present embodiment 7 will be described.

The present embodiment 7 constructs user interface screens for displaying motion pictures in icon display sections on a time-division basis.

First, the user interface 11 decides the programs to be displayed in correspondence with the icons from the program information acquiredby the program information acquiring section 9. In this case, the user interface 11 instructs the program assignment management section 12 to record and manage the channel when the program to be assigned to the icon is a currently broadcast program, and the reproducible position in the program recorder 16 when the program to be assigned to the icon is the program recorded in the program recorder 16.

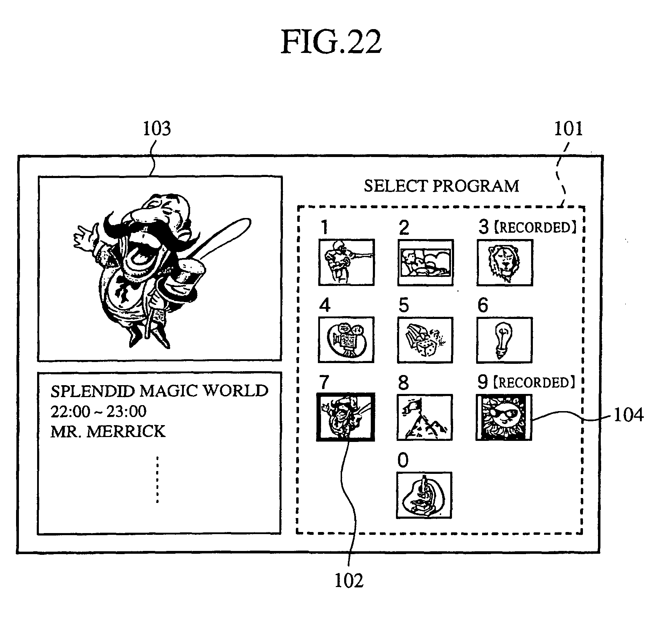

Fig. 22 is an example of the user interface screen displaying the motion pictures for the icons on a time-division basis. In Fig. 22, the reference numeral 101 designates an icon set that displays motion pictures on a time-division basis; 102 designates a currently selected icon; 103 designates a motion picture of the currently selected program; and 104 designates an icon corresponding to a recorded program. In the example of Fig. 22, the motion picture corresponding to the currently selected icon 102 is displayed on the user interface screen. In addition, the word [recorded] is displayed at the top of the icon 104 to make it clear that the program corresponding to the icon 104 is a recorded program.

The individual icon sections in the icon set 101 successively display the motion pictures beginning from the icon corresponding to the button number 1 at regular intervals. More specifically, after the icon corresponding to the button number 1 displays its motion picture for two seconds, for example, the icon corresponding to the button number 2 displays its motion picture for the next two seconds. Likewise, the successive icons display their motion pictures for a short time such as the icons corresponding to the button numbers 3, 4 ... display their motion pictures for two seconds. In the course of this, the icons that have displayed the motion pictures for the fixed time period continue to display the still pictures after displaying the motion pictures.

Next, the operation of the user interface 11 for implementing the user interface screen as shown in Fig. 22 will be described.

First, the user interface 11 configures the user interface screen in which the icon sections are vacant. It supplies the user interface screen to the graphics processor 7, and instructs the system controller 15 to display the motion pictures in the icon sections on a time-division basis. In this case, the user interface 11 provides the system controller 15 with the program assignment information about the buttons corresponding to the individual icons of the icon set 101 obtained from the program assignment information management section 12.

In the icon set 101, the icon corresponding to the button number 1 indicates a currently broadcast program. In this case, the system controller 15 uses one of the two tuner, the tuner 2a, for example, to display the motion picture 103 in the main screen, and uses the other tuner 2b for icon display. Thus, the tuner 2a continues to tune to the currently selected channel corresponding to the icon 102. In contrast, referring to the program assignment information obtained from the user interface 11, the tuner 2b tunes to the channel corresponding to the button number 1 for the fixed time period, and immediately switches the tuning to the next channel corresponding to the button number 2.

After displaying the motion picture in the icon corresponding to the button number 2, the user interface 11 displays the motion picture in the icon corresponding to the next button number 3 for the fixed time period. Since the program corresponding to the button number 3 is a recorded program, the system controller 15, referring to the program assignment information obtained from the user interface 11, reproduces the program stored in the program recorder 16, which corresponds to the button number 3, for the fixed time period without controlling the tuner 2b. After completing the reproduction, the system controller 15 requires the user interface 11 to advance the reproducible position of the recorded program corresponding to the icon of the button number 3 in the program recorder 16 by an amount corresponding to the fixed time period. The program recorder 16 continuously stores the reproducible position before the advancement.

The motion picture 103 is continuously displayed on the main screen, and the motion picture is displayed in one of the icons of the icon set 101. Thus, the demultiplexer 3 and decoder 4 must be able to carry out the parallel data processing of the two systems.

Although the present embodiment 7 employs two tuners, this is not essential. For example, providing the tuners by the number of the buttons of the ten-digit keypad 21 (ten), and employing the demultiplexer 3 and decoder 4 that can carry out the parallel data processing of ten systems, enable all the icon sections to display the motion pictures smoothly.

As described above, the present embodiment 7 is configured such that when it constructs the user interface screen for displaying the icons in correspondence with the arrangement of the ten-digit keypad 21 of the remote control 13, it employs the motion pictures as the icons to be displayed. As a result, the present embodiment 7 enables the user to select the program referring to more detailed contents of the programs than when referring to still pictures.

### INDUSTRIAL APPLICABILITY

As described above, the broadcast receiver in accordance with the present invention is suitable for displaying the user interface screen to help the user carry out the program selection.

## Claims

1. A broadcast receiver comprising:
program information acquiring means for obtaining program information about currently broadcast programs or to-be-broadcast programs;
icon display means for identifying icons associated with the programs referring to the program information obtained by said program information acquiring means, and for displaying the icons on a user interface screen with establishing correspondence of the icons with an arrangement of channel selection buttons of a remote control; and
program selection means for selecting, when a user operates any one of the channel selection buttons, a program associated with the icon corresponding to the channel selection button.

2. The broadcast receiver according to claim 1, wherein when a program has been stored and its program information has been recorded, said icon display means identifies the icon associated with the program referring to the program information, and displays the icon on the user interface screen with establishing correspondence of the icon with the arrangement of the channel selection buttons of the remote control.

3. The broadcast receiver according to claim 1, wherein when a retrieval condition is given to the program information, said icon display means, referring to the program information satisfying the retrieval condition, identifies the icons associated with the programs.

4. The broadcast receiver according to claim 3, wherein even when said icon display means identifies the icons associated with the programs referring to the program information satisfying the retrieval condition, if the number of icons identified is less than the number of the channel selection buttons, said icon display means, referring to the program information not satisfying the retrieval condition, identifies the icons associated with the programs.

5. The broadcast receiver according to claim 1, wherein when the number of the icons associated with the programs exceeds the number of the channel selection buttons, said icon display means distributes the icons to a plurality of user interface screens.

6. The broadcast receiver according to claim 5, wherein said program selection means switches the user interface screen to be displayed in response to an operation of a page shift key by a user.

7. The broadcast receiver according to claim 1, wherein the icons identified by said icon display means consist of an image symbolizing a genre of the program.

8. The broadcast receiver according to claim 1, wherein the icons identified by said icon display means consist of a motion picture of the program.

9. The broadcast receiver according to claim 1, wherein the icons identified by said icon display means consist of a still picture constituting part of a motion picture of the program.

10. The broadcast receiver according to claim 1, wherein the icons identified by said icon display means are associated with a character string in the program information obtained by said program information acquiring means.

11. The broadcast receiver according to claim 1, wherein the icons identified by said icon display means are associated with a bit string in the program information obtained by said program information acquiring means.

12. The broadcast receiver according to claim 1, wherein the icons identified by said icon display means are associated with a character string specified by a user.

13. The broadcast receiver according to claim 1, wherein said icon display means displays symbols, which are written on the channel selection buttons of a remote control, near the corresponding icons.

14. The broadcast receiver according to claim 1, wherein said icon display means displays a motion picture of a currently selected program on the user interface screen.

15. The broadcast receiver according to claim 1, wherein said icon display means displays program information about a currently selected program on the user interface screen.

16. The broadcast receiver according to claim 1, wherein said icon displaymeans displays the icon corresponding to a currently selected program distinguishingly from the icons corresponding to currently unselected programs.

17. The broadcast receiver according to claim 16, wherein said icon display means encloses the icon corresponding to the currently selected program with a block with a color higher in contrast against a background color than the icons corresponding to the currently unselected programs.

18. The broadcast receiver according to claim 16, wherein said icon display means provides the icon corresponding to the currently selected program with a three-dimensional visual effect.

19. The broadcast receiver according to claim 16, wherein said icon display means makes a color tone of the icon corresponding to the currently selected program different from a color tone of the icons corresponding to the currently unselected programs.

20. The broadcast receiver according to claim 16, wherein said icon display means makes a size of the icon corresponding to the currently selected program greater than that of the icons corresponding to the currently unselected programs.

21. The broadcast receiver according to claim 2, wherein said icon display means displays a specific symbol on the icon corresponding to the program recorded.

22. The broadcast receiver according to claim 1, wherein when a user temporarily designates one or more icons, said icon display means displays only the icons designated by the user.
